# EUROPEAN PATENT APPLICATION

(11) **EP 4 677 978 A1**
(43) Date of publication of application: **14.01.2026**
(21) Application number: 25188794.9
(22) Date of filing: 10.07.2025
(51) Int. Cl.: A01B 49/02, A01B 49/04, A01B 49/06, A01B 51/02

(54) **AGRICULTURAL MACHINE**

(30) Priority: 10.07.2024 IT 202400015979
(71) Applicant: ROTER ITALIA Srl, 46035 Ostiglia (MN) (IT)
(72) Inventor: FORIGO, Sandro, 46035 Ostiglia (MN) (IT)
(74) Representative: Gallo, Luca

(57) **Abstract**

Farming machine (1), which comprises a support frame (2) provided with four wheels (20), in order to allow the farming machine (1) to advance on a terrain along an advancement direction (A), and with a main body (21) supported by the wheels (20) and spaced with respect to the terrain, and which on the lower part delimits a housing volume (V). The main body (21) of the support frame (2) is extended along a main extension direction (X), parallel to the advancement direction (A), between a front end (21') and an opposite rear end (21"). The farming machine (1) also comprises a first tool (3), a second tool (4) and a third tool (5). The first tool (3) is mounted at the front end (21') of the main body (21) of the support frame (2), outside the housing volume (V) and is arranged for carrying out a first working operation. The second tool (4) is connected to the main body (21), is placed in the housing volume (V) and is arranged for carrying out a second working operation. The third tool (5) is mounted at the rear end (21") of the main body (21) of the support frame (2), outside the housing volume (V) and is arranged for carrying out a third working operation. The farming machine (1) also comprises actuation means (6), which are mounted on the support frame (2) and are operatively connected, in an independent manner, to the first, second and third tool (3, 4, 5), in order to actuate the latter in an independent manner during the advancement of the farming machine (1) on the terrain.

## Description

### Field of application

The present invention regards a farming machine, according to the preamble of the independent claim 1.

The present farming machine is advantageously employable in order to carry out multiple simultaneous working operations on a terrain.

In particular, the aforesaid working operations can be directed to work the terrain itself, for example being operations of shredding, milling, bed-forming etc., or they can be aimed to indirectly treat the terrain, for example being operations of seeding, mulching etc.

Therefore, the farming machine, object of the present invention, is advantageously employed in the field of production of farming machines.

### State of the art

In the farming field, farming machines are known for executing operations on terrain and/or on cultivations, which are provided with tools adapted to execute, for example, operations of shredding, milling, seeding, etc.

Such machines of known type comprise a drive unit, arranged for advancing on the terrain, and a tool, such as for example a cutter, a shredder, a seeder etc., which is connected on the rear part to the drive unit, by means of a power take-off, in order to be driven and simultaneously actuated by the drive unit, so as to carry out the desired operation of working of the terrain. Such machines of known type provide that a user be on board in order to control the advancement and the use on the terrain to be treated.

As known, multiple farm working operations are required by a terrain; these provide for a precise sequence of operations that must be carried out in series so as to obtain the desired agronomy results, such as in particular correct growth, development and productivity of the cultivations.

For example, before the cultivation of a new cultivation, it is necessary to provide for carrying out terrain preparation operations, such as in particular a shredding operation, for removing the plant residues of the preceding cultivation, a subsequent milling operation, aimed to cut and move the terrain to be cultivated, in order to then carry out the seeding operations, which comprise, in addition to the seeding step, also the operations of manuring and post-seeding treatment of the terrain.

The overall set of such operations requires the user to change the tool mounted on the farming machine very frequently, i.e. each time that a new operation must be carried out. This requires long times for dismounting and mounting a different tool each time, as well as for traveling - newly and multiple times - the terrain to be cultivated in order to carry out the working operations with the tool mounted on the machine.

Such drawback is still more significant in the horticultural and viticultural fields, i.e. for uses different from those in an open farm field, since in such sectors it is necessary to provide for a greater number of tools and working operations to be carried out, also depending on the cultivation to be cultivated and/or treated.

Indeed, while for open farm fields the working operations are usually more limited, being in particular directed towards the so-called industrial plants and usually comprising the working operations of shredding, cutting etc., in the horticultural and viticultural field or in greenhouses such working operations instead comprise - in addition to the conventional working operations listed above - also the working operations of post-seeding treatment that depend on the type of cultivation (such as for example mulching and spraying) which considerably increase the times for treatment and care of the entire cultivation.

There is therefore the need in the farming field, and in particular in the horticultural field, to reduce the times and costs of the terrain working operation processes for the preparation and maintenance of the cultivations, in particular horticultural cultivations.

### Presentation of the invention

In this situation, the problem underlying the present invention is to eliminate the drawbacks of the abovementioned prior art, by providing a farming machine which allows reducing times and costs for cultivating a terrain, in particular horticultural.

A further object of the present invention is to provide a farming machine which allows carrying out multiple working operations simultaneously on the terrain.

A further object of the present invention is to provide a farming machine which is capable of carrying out working operations both with a user on board and in an automatic manner.

A further object of the present invention is to provide a farming machine which allows reducing the environmental impact.

A further object of the present invention is to provide a farming machine which is easily employable for different types of cultivations, and in particular which is easy to restructure based on the user needs.

A further object of the present invention is to provide a farming machine which is structurally stable and strong.

A further object of the present invention is to provide a farming machine which is simple and inexpensive to attain.

### Brief description of the drawings

The technical characteristics of the invention, according to the aforesaid objects, are clearly seen in the contents of the below-reported claims and the advantages thereof will be more evident from the following detailed description, made with reference to the enclosed claims, which represent several exemplifying and non-limiting embodiments of the invention, in which:

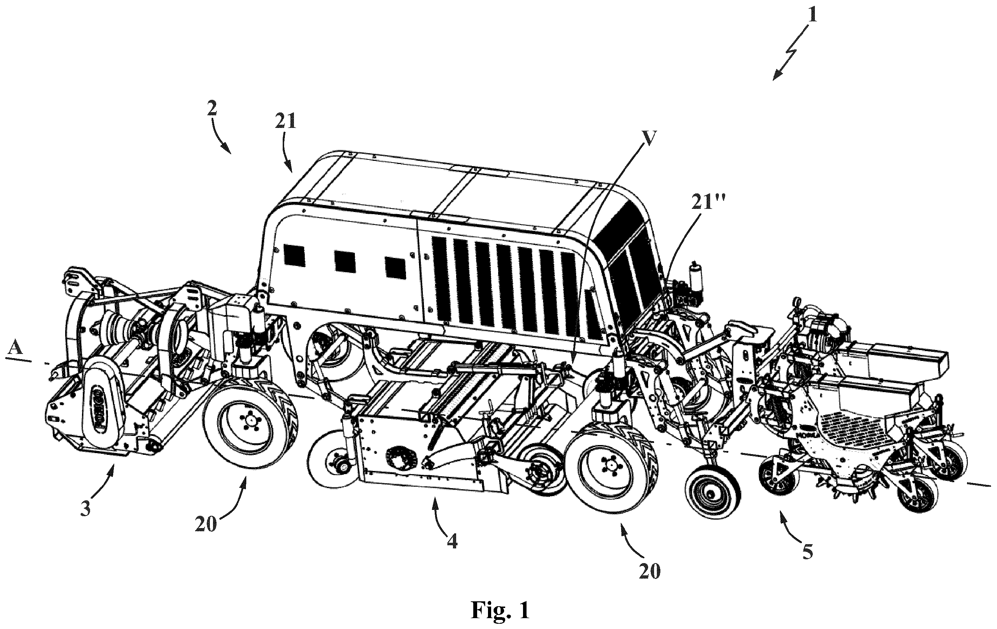

- figure 1 shows a top rear perspective view of a farming machine, object of the present invention;

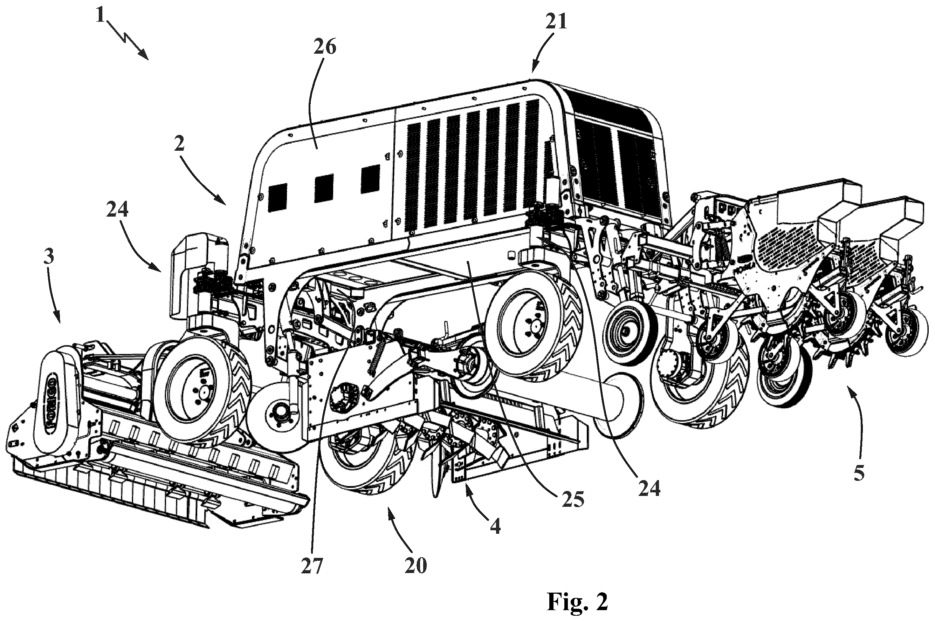

- figure 2 shows a bottom rear perspective view of the present farming machine;

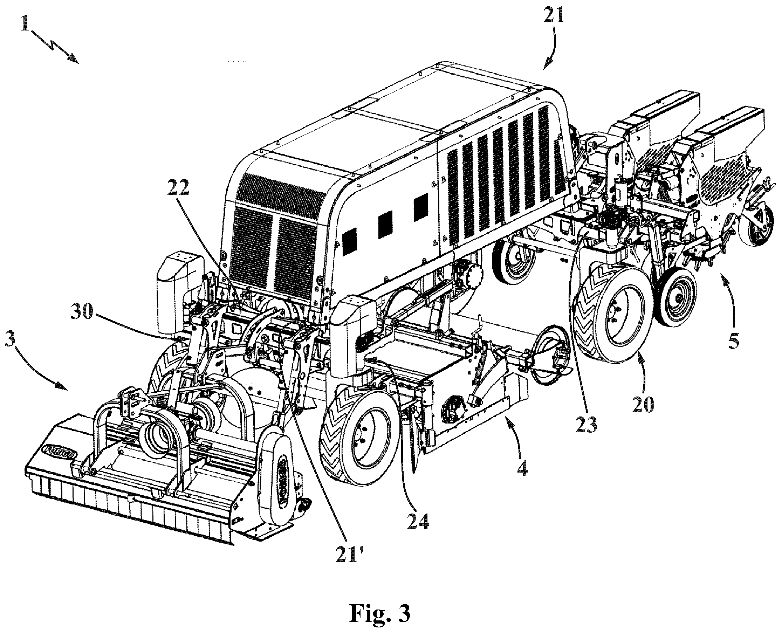

- figure 3 shows a top front perspective view of the present farming machine;

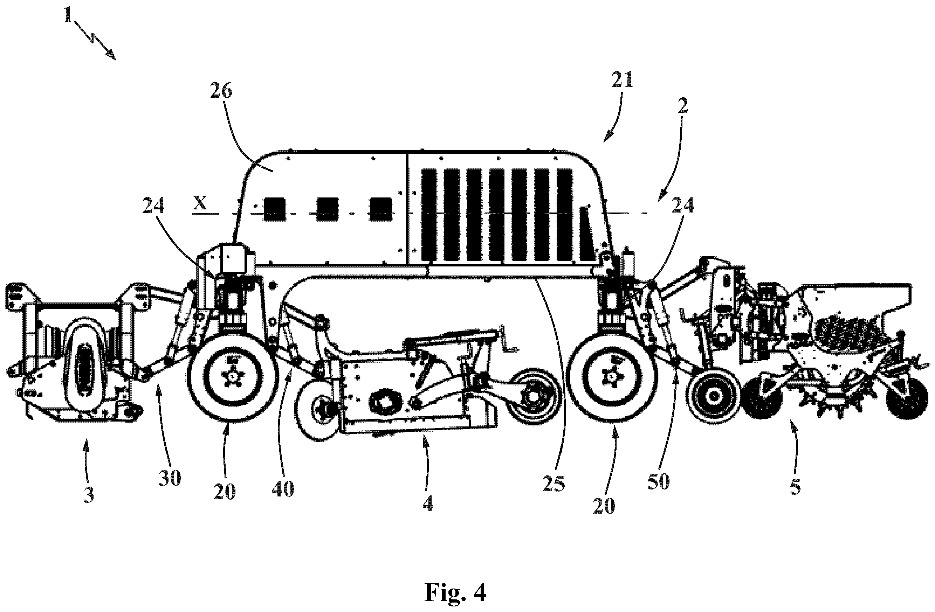

- figure 4 shows a side view of the present farming machine;

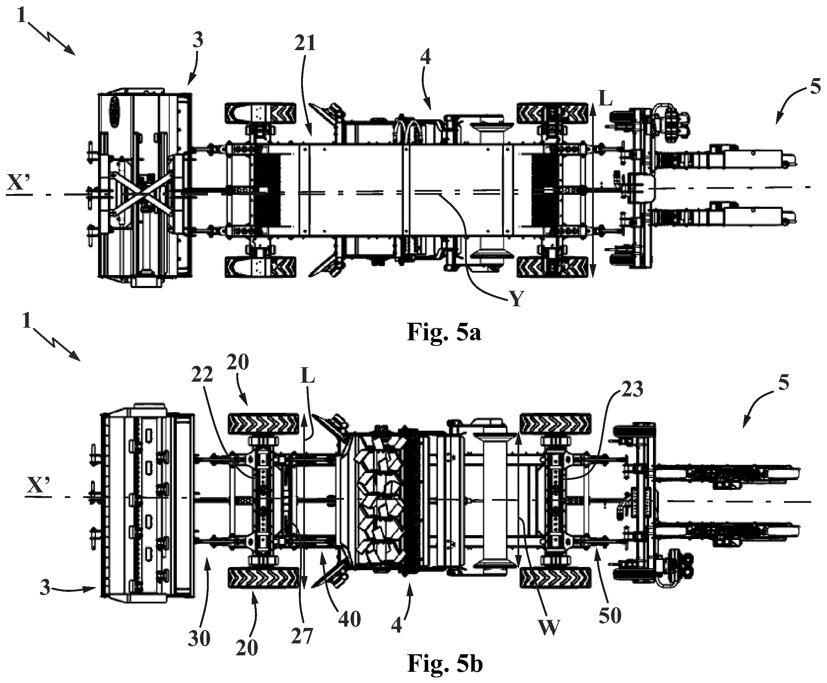

- figures 5a and 5b respectively show a top view and a bottom view of the present farming machine;
- figure 6 shows a top rear perspective view of the present farming machine with several parts removed in order to better illustrate other parts;
- figure 7 shows a top front perspective view of the present machine provided with a command station for a user.

### Detailed description of a preferred embodiment

With reference to the enclosed drawings, reference number 1 overall indicates the farming machine, object of the present invention.

The farming machine 1, object of the invention, is advantageously employable in order to carry out operations of preparation and maintenance of the terrain for horticultural cultivations, in particular in greenhouses, even if it is also employable for cultivations of medium-height plants, such as for example orchards, and in particular vineyards, and for use in open farm fields.

As is better described hereinbelow, the farming machine 1, object of the present invention, is configured for being remotely controlled by a user, or alternatively for being physically controlled by a user from a command station mounted such machine edge.

In accordance with the idea underlying the present invention, the farming machine 1 comprises a support frame 2, preferably metallic, which is provided with at least four wheels 20, in order to allow the farming machine 1 itself to advance on a terrain along an advancement direction A, and with a main body 21, which is supported by the wheels 20, spaced with respect to the terrain, and which on the lower part delimits a housing volume V.

**In** particular, the support frame 2 comprises multiple legs 24, each of which projecting upward starting from a corresponding wheel 20 supporting the main body 21, spaced from the terrain. Preferably, the aforesaid legs 24 are telescopic legs, in a manner such to allow varying the distance of the main body 21 from the ground terrain depending on the user needs and on the cultivation and/or on the different type of working operation to be carried out. Advantageously, the main body 21 comprises a lower wall 25, preferably polygonal and for example rectangular, which is directed towards the terrain. Advantageously, the lower wall 25 is mechanically connected to the support frame 2 and delimits on the lower part the aforesaid housing volume V.

**In** other words, the housing volume V is to be intended as the volume which is extended from the terrain to the lower wall 25 of the main body 21.

**In** particular, the wheels 20 are connected to the main body 21, by means of the aforesaid telescopic legs 24, at the vertices of the latter, and thus delimit, at least partly laterally, the aforesaid housing volume V.

The (single) main body 21 of the support frame 2 is extended along a main extension direction X, parallel to the advancement direction A, between a front end 21' and an opposite rear end 21".

**In** particular, the front end 21' is represented by the end upstream of the main body 21 in an advancement sense along the advancement direction A and the rear end 21" is represented represented by the end downstream of the main body 21 in the aforesaid advancement sense along the advancement direction A itself.

More in detail, the main body 21 of the support frame 2 is a rigid body.

Advantageously, the main body 21 of the support frame 2 is rigidly extended between the front end 21' and the rear end 21'', in particular along the main extension direction X.

Preferably, the front end 21' of the main body 21 is rigidly connected to the rear end 21" of the main body 21 itself.

In particular, the main body 21 lacks articulations interposed between the front end 21' and the rear end 21", so as to form a rigid element (formed by parts integral with each other, at least along the main extension direction X).

The farming machine 1 comprises a first tool 3, mounted at the front end 21' of the main body 21 of the support frame 2, outside the housing volume V, and arranged for carrying out a first working operation.

In particular, the aforesaid first working operation can be carried out directly on the terrain or be carried out on a cultivation (one or more plants) intercepted by the farming machine 1 during its advancement on the terrain.

For example, as described in detail hereinbelow, the first tool 3 is an agricultural shredder machine or a farming milling machine, respectively arranged for removing the plant residue of a preceding cultivation or for chopping up the terrain.

The farming machine 1 also comprises a second tool 4, connected to the main body 21, placed in the housing volume V, and arranged for carrying out a second working operation.

In particular, the aforesaid second working operation can be carried out directly on the terrain or be carried out on a cultivation (one or more plants) intercepted by the farming machine 1 during its advancement on the terrain.

In particular, the second tool 4 is placed below the lower wall 25 of the main body 21.

Preferably, the second tool 4 is connected to the main body 21 so as to be driven by the latter (and not pushed) during the advancement of the farming machine 1 on the terrain. In other words, the second tool 4 is connected by means of a connection portion thereof which is placed on the front part, upstream with respect to the advancement sense along the advancement direction A, with respect to an operative portion adapted to work the terrain, as is better described hereinbelow.

In particular, preferably, the second tool 4 is connected in proximity to the front end 21' of the main body 21 of the support frame 2.

For example, as described in detail hereinbelow, the second tool 4 is a farming milling machine, a device for extending a mulching sheet, or a fertilizer spreader, arranged for distributing at least one fertilizer on the terrain, in particular following the working operation carried out by first tool 3.

The farming machine 1 also comprises a third tool 5, mounted at the rear end 21'' of the main body 21 of the support frame 2, outside the housing volume V, and arranged for carrying out a third working operation.

In particular, the aforesaid third working operation can be carried out directly on the terrain or it can be carried out on a cultivation (one or more plants) intercepted by the farming machine 1 during its advancement on the terrain.

For example, as described in detail hereinbelow, the third tool 5 is a seeder, which is arranged in order to carry out the seeding of the seeds of a predetermined cultivation, preferably following the working operations carried out by the first and by the second tool 3, 4.

The farming machine 1 also comprises actuation means 6, which are mounted on the support frame 2 and are operatively connected, in an independent manner, to the first tool 3, to the second tool 4 and to the third tool 5, in order to actuate the latter in an independent manner during the advancement of the farming machine 1 on the terrain.

In other words, the actuation means 6 are configured in order to actuate only one between the first, the second and the third tool 3, 4, 5 with the other two tools in a rest configuration (i.e. not actuated by the actuation means 6), or in order to actuate two between the first, the second and the third tool 3, 4, 5 with the other tool in rest configuration, or in order to simultaneously actuate the first, the second and the third tool 3, 4, 5.

**In** this manner, the farming machine 1 allows reducing the times and costs necessary for cultivating the terrain, rendering the operation for working terrain itself quick and efficient.

**In** particular, the farming machine 1 thus can carry out multiple working operations simultaneously on the terrain, with the actuation means 6 that can simultaneously control first, the second and the third tool 3, 4, 5 in order to respectively carry out the aforesaid first, second and third working operation on the terrain.

Of course, without departing from the protective scope of the present invention, the farming machine 1 can only carry out one or two working operations simultaneously on the terrain by means of the first, second and/or third tool 3, 4, 5 without having to dismount the non-used tools (and thus optimizing the times), in particular such tools 3, 4, 5 being actuated in an independent manner by the actuation means 6.

Advantageously, the arrangement on the farming machine 1 of three tools allows preventing the need to frequently change the tools themselves depending on the working operation to be carried out.

Advantageously, the above-described arrangement of the first, second and third tool 3, 4, 5 allows using large-size tools, such as for example agricultural shredder machines and farming milling machines, allowing the farming machine 1 to carry out working operations both in open field (reducing the time of working operations due to the use of large-size tools) as well as in horticulture, in vineyards and/or in greenhouses.

Advantageously, the first tool 3 is connected at a central portion of the front end 21' of the main body 21, and, preferably, the third tool 5 is connected at a central portion of the rear end 21" of the main body 21.

**In** particular, the main body 21 is provided with a symmetry axis Y parallel to the advancement direction A.

More in detail, by central portions of the front end 21' and of the rear end 21", it must be intended the portions of the aforesaid front end 21' and rear end 21" of the main body 21 placed at the aforesaid symmetry axis Y, and hence intermediate between two lateral flanks of the same main body 21.

Advantageously, the first and the third tool 3, 5 are placed with respective symmetry axes parallel to, and preferably coinciding with the symmetry axis Y of the main body 21 of the support frame 2.

Advantageously, the first, second and third tool 3, 4, 5 are placed aligned with each other along an alignment direction X', which is parallel to the main extension direction X of the main body 21 and to the advancement direction A, in order to carry out a predetermined sequence of working operations during the advancement of the farming machine 1 on the terrain. Preferably, the three tools 3, 4, 5 are placed in a manner such that the respective symmetry axes are coinciding.

In this manner one ensures that a portion of terrain treated by the first tool 3 is treated in sequence also by the second tool 4 and by the third tool 5 during the advancement of the farming machine 1 along a specific advancement direction A.

In particular, the first tool 3 is placed upstream of the main body 21 of the support frame 2 in the aforesaid advancement sense, and more in detail upstream of the front end 21', and, preferably, the third tool 5 is placed downstream of the main body 21 of the support frame 2, and more in detail downstream of the rear end 22".

In this manner, the farming machine 1 with the respective first, second and third tool 3, 4, 5 has a bulk which is mainly extended along the alignment direction X', therefore limiting the lateral bulk.

Consequently, the farming machine 1 is capable of advancing both in open field and on horticultural terrain or orchards that provide for the presence of rows of plants, whether these are low-height, e.g. in the case of horticultural cultivations, or medium-height, e.g. in the case of vineyards, without intercepting the plants themselves, thus preventing damaging them or, as described in detail hereinbelow, passing above a row of the latter without intercepting the adjacent rows.

Advantageously, the first tool 3 is selected from among an agricultural shredder machine, a farming milling machine, a farming burier, a disc cultivator, a blade cultivator, a device for hoeing.

In particular, such tools are adapted to carry out preparatory working operations of the terrain before seeding or planting new cultivations. For example, the arrangement of an agricultural shredder machine allows removing the plant residue of a preceding cultivation so to be able to subsequently prepare the terrain for a new cultivation.

Otherwise, the use of a farming milling machine or of a farming burier as first tool 3 allows chopping up the terrain, for example preparing it for the subsequent seeding.

Advantageously, the second tool 4 is selected from among a fertilizer spreader, a farming milling machine, a farming burier, a bed former, a device for extending a mulching sheet, a seeder.

Advantageously, the working operation carried out by such second tool 4 is adapted to prepare the terrain for the set cultivation.

In particular, the second tool 4 is a farming milling machine or a farming burier preferably in the event in which the latter is not employed as first tool 3 in the farming machine 1. Otherwise, the second tool 4 can be a fertilizer spreader, arranged for distributing at least one fertilizer on the terrain, in particular following the working operation carried out by the first tool 3, e.g. following a working operation of milling of the terrain carried out by the latter. Otherwise, additionally, the second tool 4 is a bed former arranged for preparing the beds of terrain on which the predetermined cultivations are seeded or planted, or even more a device for extending a mulching sheet on the terrain so as to prevent the growth of weeds and, more generally, to protect the terrain from external agents and maintain the properties thereof without requiring further treatments.

Advantageously, the third tool 5 is selected from among a seeder, a device for extending a mulching sheet (in particular if the latter are not selected as second tool 4), an irrigation pipe, a spraying device.

Of course, without departing from the protective scope of the present invention, the farming machine 1 can provide for different combinations of tools between the above-described combinations. Advantageously, such configuration of the first, second and third tool 3, 4, 5 allows carrying out working operations on the terrain that follow each other without having to change the aforesaid first, second and third tool 3, 4, 5 between one working operation and the next, thus optimizing the times for the terrain working operation.

Advantageously, the farming machine 1 comprises three different farm tools 3, 4, 5, in a manner such to carry out different working operations on one same terrain, and in particular three separate working operations in a predetermined sequence on one terrain portion to be worked.

More in detail, each between the first, second and third tool 3, 4, 5 is selected as a function of the others between the first, second and third tool 3, 4, 5. In particular, the first tool 3 is selected such that it is adapted to carry out a terrain working operation that must be executed before the working operation carried out by the second and by the third tool 4, 5. Analogously, the second tool 4 is selected such that it is adapted to carry out a working operation that must be executed after the working operation carried out by the first tool 3 and before the working operation carried out by the third tool 5.

Advantageously, in accordance with the preferred embodiment of the farming machine 1 illustrated in the enclosed figures, the first tool 3 is an agricultural shredder machine, the second tool 4 is a bed former, and the third tool 5 is a seeder.

In particular, such preferred embodiment allows the farming machine 1 to carry out the main working operations necessary for a cultivation on a farming terrain with the same farming machine 1 without changing the tools between one working operation and the next working operation.

Advantageously, the support frame 2 defines, with the wheels 20, a passage width L, and each first, second and third tool 3, 4, 5 defines a respective work width W', W", W''', which is smaller than the passage width L defined by the wheels 20.

In particular, the passage width L is defined at one section of the wheels 20 that is distal with respect to the symmetry axis Y of the main body 21 of the support frame 2.

Advantageously, the work width W', W", W‴ respectively of the first, second and third tool 3, 4, 5, smaller than the passage width L, allows the tools 3, 4, 5 themselves, and in particular the first and second tool 3, 4, to carry out the working operations on the terrain without such working operations being damaged by the passage of the wheels 20 during the advancement of the farming machine 1 along the advancement direction A.

Advantageously, the support frame 2 comprises a front mounting bar 22, connected at the front end 21' of the main body 21, and a rear mounting bar 23, connected at the rear end 21" of the main body 21.

Preferably, the front mounting bar 22, and preferably also the front mounting bar 23, are extended along a respective extension direction, which is transverse, and more in detail orthogonal, to the main extension direction X of the main body 21 of the support frame 2.

In particular, the front 22 and rear 23 mounting bars are rigidly connected to each other by means of the main body 21 of the support frame 2.

Advantageously, the first tool 3 is provided with a first three-point attachment 30, per se known the main skilled in the art and therefore not discussed in detail hereinbelow, connected to the front mounting bar 22, and the third tool 5 è provided with a second three-point attachment 50, connected to the rear mounting bar 23.

Advantageously, the support frame 2 is provided with an internal mounting bar 27, which is preferably placed at the front end 21' of the main body 21 and is extended along a corresponding extension direction, parallel to the extension directions of the front 22 and rear 23 mounting bar, in particular transverse (and more particularly orthogonal) to the main extension direction X of the main body 21 of the support frame 2.

Advantageously, such internal mounting bar 27 is fixed to the lower wall 25 of the main body 21, in proximity to the front end 21' of the latter, and is in particular placed in the housing volume V.

**In** particular, the internal mounting bar 27 is rigidly connected to the front and rear bars 22, 23 by means of the main body 21 of the support frame 2.

Advantageously, the second tool 4 is connected with one end thereof to the internal mounting bar 27, and is extended from the aforesaid end towards the rear end 21" of the main body 21, so as to be housed in the housing volume V.

In particular, the second tool 4 is provided with the aforesaid connection portion, fixed to the internal mounting bar 27, and with the operative portion (e.g. a rotor on which the following are mounted: cutters, hoes, knives, or a mulching roller etc.) that is placed downstream of the connection portion with respect to the advancement sense along the advancement direction A of the farming machine 1, and hence closer to the rear end 21" of the main body 21.

Advantageously, the second tool 4 is provided with a third three-point attachment 40, connected to the internal mounting bar 27.

Advantageously, the front 22 and rear 23 mounting bars and, preferably, internal mounting bar 27 are telescopic along the respective extension directions.

Preferably, the aforesaid mounting bars 22, 23, 27 are extended orthogonal to the main extension direction X of the main body 21 of the support frame 2 between a configuration of minimum extension, e.g. comprised between 1000 and 1400 mm, and a configuration of maximum extension, e.g. comprised between 1500 and 2400 mm.

Of course, such mounting bars 22, 23, 27 are configured in order to also take on intermediate configurations between the aforesaid configurations of minimum and maximum extension.

Preferably, each mounting bar (front 22, rear 23 and, preferably, internal 27) comprises at least one fixed portion, which is fixed to the main body 21, and at least one movable portion (in particular two, one per side) which is movable in extension and retraction along the corresponding extension direction.

Advantageously, as described in detail hereinbelow, the wheels 20 mounted on the respective telescopic legs 24 are integral with the movable portion of the telescopic front 22 and rear 23 mounting bars and, therefore, the movement of the latter between the configuration of minimum extension and maximum extension adjusts the passage width L defined by the wheels 20 themselves.

**In** particular, the farming machine 1 is provided with actuator members, e.g. hydraulic or, otherwise, electric, which are arranged for moving the aforesaid mounting bars 22, 23, 27 between the configuration of minimum extension and the configuration of maximum extension. **In** this manner, the farming machine 1 is configured for adjusting the passage width L as a function of the type of cultivation on the terrain to be worked, e.g. as a function of the distance between the rows of plants or between the beds of terrain. For example, the farming machine 1 can vary the passage width L in order to simultaneously pass above multiple rows or beds during the advancement along the advancement direction A, thus reducing the work times and increasing the productivity.

Advantageously, the first, second and third tool 3, 4, 5 are mounted on a fixed portion respectively of the front 22, internal 27 and rear 23 mounting bar, such that the respective work width W', W", W‴ of the first, second and third tool 3, 4, 5 remains constant with the variation of the passage width L through the aforesaid telescopic mounting bars.

Advantageously, the farming machine 1 comprises multiple advancement motors, in which each wheel 20 of the at least four wheels 20 is connected to a corresponding advancement motor, in order to allow the independent motorization of the wheels 20.

In particular, the farming machine 1 comprises multiple actuation members, e.g. one for each advancement motor, which allow controlling each wheel 20 in a separate manner, for example by providing a greater drive force to a specific wheel 20 in order to overcome an obstacle (such as for example a stone or a trough).

Consequently, the farming machine 1 is provided with four drive wheels 20, which preferably are drive wheels that are independent from each other.

In this manner, the farming machine 1 thus configured can be used on impervious terrain, e.g. muddy or irregular which has considerable slope, such as for example hilly terrain on which a vineyard is present.

Preferably, the advancement motors are electric motors, e.g. alternating current. In particular, each advancement electric motor is a wheel motor, which is installed in the hub of a respective wheel 20, rendering it a drive wheel.

Advantageously, the farming machine 1 comprises at least four steering members, each of which associated with a corresponding wheel 20, in order to rotate the wheel 20 around a vertical steering axis thereof.

In particular, the wheels 20 can steer in an independent manner with respect to each other due to the aforesaid steering members.

Advantageously, the aforesaid steering members also allow the farming machine 1 to easily overcome the irregularities of the terrain.

Preferably, the steering members are arranged in order to rotate the wheel by an angle comprised between 45° and 360°, and still more preferably at least by 90°, such to be able to improve the maneuverability of the farming machine 1.

In particular, each of the steering members comprises a corresponding steering motor, preferably electric, which is actuatable in order to command the relative steering member to steer a corresponding wheel 20.

In this manner, when the farming machine 1 reaches the end of the terrain, after having concluded the passage above a bed or along a row along the advancement direction A, the possibility to separately steer each wheel 20 allows more easily aligning it with the bed or subsequent row, further reducing the necessary maneuvering spaces.

Advantageously, the support frame 2 comprises a closure casing 26, mounted on top of the main body 21, and in particular on the lower wall 25 of the latter, and defining, with such lower wall 25, a containment volume C, in which the actuation means 6 are housed.

In particular, the actuation means 6 are mounted above the lower wall 25 and, more in detail, are placed above the housing volume V delimited by the main body 21 of the support frame 2.

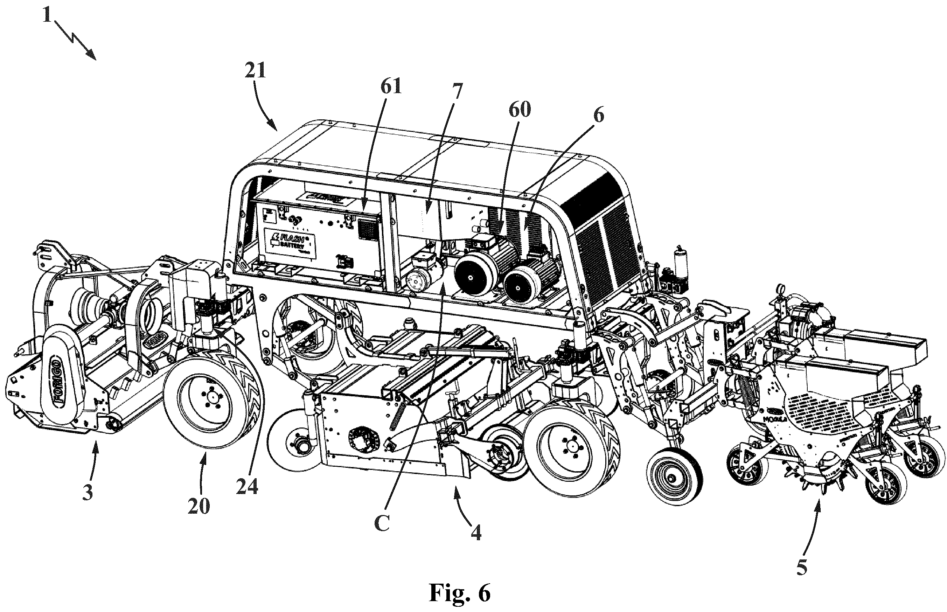

Advantageously, as is visible for example in figure 6, the actuation means 6 of the farming machine 1 comprise multiple actuation motors 60, each of which arranged in order to provide energy respectively to the first, second and third tool 3, 4, 5 and is preferably arranged in the containment volume C.

Preferably, the actuation motors 60 are electric motors. In particular, in a preferred configuration, the actuation means 6 comprise a plurality of electronic converters, each of which electrically connected to a corresponding actuation motor 60 and to a corresponding tool 3, 4, 5. In this manner, the actuation means 6 are configured in order to command each tool 3, 4, 5 in an independent manner with respect to each other.

Otherwise, the actuation means 6 comprise only one actuation motor 60, which is connected to each tool 3, 4, 5, preferably by means of the respective electronic converters.

Advantageously, the farming machine 1 comprises a power supply battery 61, which is placed in the containment volume C defined by the closure casing 26 and by the lower wall 25 and is arranged for power supplying at least one between the actuation motors 60, the advancement motors and the steering motors and the auxiliary services of the farming machine 1 (such as for example the lighting, the cooling/heating, etc.). For example, the power supply battery 61 has a capacity greater than 60 kWh, e.g. equal to 80 kWh, sufficient to allow at least the advancement of the farming machine 1 on a terrain and the simultaneously working operation by means of the first, second and third tool 3, 4, 5.

Preferably, the tool with greater power is the second tool 4, able to have large size since housed in the housing volume V. For example, such second tool 4 can have a nominal power up to 40 kW, and preferably up to 20 kW.

Advantageously, the actuation means 6 comprise at least one connection bus, comprising electrical wires preferably placed at a voltage lower than 100 V, e.g. at 89 V (such to limit the electrical risk), adapted to electrically connect the power supply battery 61 with the advancement motors, the steering motors and the actuation motors 60.

Preferably, the farming machine 1 comprises a power take-off, which is arranged in order to allow the connection of a further farm tool. **In** particular, such power take-off is electrically connected to a corresponding actuation motor 60 by means of a corresponding electronic converter.

Advantageously, the farming machine 1 thus configured, which preferably provides for the presence of electrical power energy generators (in particular the advancement motors, the actuation motors 60 and the steering motors), allows reducing the environmental impact and is in particular suitable for working operations of cultivations in greenhouses, since it does not emit exhaust gases, as it lacks internal combustion motors.

Otherwise, without departing from the protective scope of the present invention, the actuation means 6 comprise an internal combustion engine, advantageously connected to the tools 3, 4, 5 by means of an alternator adapted to transform the mechanical energy generated by the aforesaid internal combustion engine into electrical energy, which for example comes to supply multiple power take-offs, each of which advantageously connected respectively to the first, the second and the third tool 3, 4, 5.

In particular, in such configuration the aforesaid internal combustion engine is arranged in order to allow the advancement of the farming machine 1, more in detail being connected to the wheels 20 by means of mechanical members that are per se known to the man skilled in the art. Advantageously, as described above, the support frame 2 comprises multiple telescopic legs 24, each of which connected to the main body 21 of the support frame 2 and carries a corresponding wheel 20 mounted thereon.

Advantageously, the farming machine 1 comprises multiple actuators, each of which mounted on a corresponding telescopic leg 24 of the support frame 2, and is actuatable in order to move the corresponding telescopic leg 24 between an extended position and a retracted position.

In particular, the actuators are of linear type, preferably hydraulic, which for example comprise hydraulic pistons.

Advantageously, the movement of the telescopic legs 24 involves a movement of the main body 21 of the support frame 2.

More in detail, when all the telescopic legs 24 are moved into the aforesaid retracted position, the farming machine 1 takes on a configuration of minimum height, in which the main body 21, and more precisely the lower wall 25, is at a minimum height from the ground, preferably comprised between 60 cm and 150 cm, sufficient in order to allow the farming machine 1 to house the second tool 4 in the housing volume V.

In particular, when all the telescopic legs 24 are moved into the aforesaid extended position, the farming machine 1 takes on a maximum height configuration, in which the main body 21, and more precisely the lower wall 25, is at a maximum height from the ground, which is preferably comprised between 100 cm and 250 cm.

Advantageously, each telescopic leg 24 can be moved by the corresponding actuator into an intermediate position between the retracted position and the extended position, such to allow the farming machine 1 to take on intermediate heights comprised between the minimum height and the maximum height.

In this manner, it is possible to vary the height of the main body 21 of the support frame 2 from the ground depending on the type of cultivation. For example, in the case of horticultural cultivations, in which the plants are extended height-wise for several tens of centimeters and the vegetables are situated in proximity to the ground, it is possible to place the main body of the support frame 2 at the aforesaid minimum height.

Otherwise, in the case of medium-height plants, such as for example vineyards or other fruit plants, it is possible to space the main body 21 of the support frame 2 from the ground by means of the telescopic legs 24 such that the main body 21 itself can pass above the aforesaid rows.

Advantageously, when the main body 21 of the support frame 2 is vertically translated by the movement of the telescopic legs 24, the tools 3, 4, 5 mounted on the main body 21 itself are moved in a manner integral with the latter.

Otherwise, the tools 3, 4, 5 are mounted on the main body 21 such to remain at a constant distance from the ground even when the actuators move the telescopic legs 24, vertically lifting the main body 21 itself.

In particular, in such case the tools 3, 4, 5 are mounted on a fixed portion of the main body 21 of the support frame 2, which remains fixed when the telescopic legs 24 are moved upward, or, otherwise, on a fixed portion of the telescopic legs 24 themselves or, additionally, they are mounted on telescopic arms connected to the main body 21, which are adapted to move the tools 3, 4, 5 themselves downward when the telescopic legs 24 are moved upward, such that the relative motion between the telescopic legs 24 and the aforesaid telescopic arms is substantially null and the tools 3, 4, 5 remain at a fixed position with respect to the ground.

Advantageously, each actuator can move the corresponding telescopic leg 24 in an independent manner from the other telescopic legs 24.

In this manner, the farming machine 1 is capable of being positioned with the main body 21 substantially horizontal, even for working operations on sloped terrain, such as for example vineyards.

Advantageously, the farming machine 1 comprises two front wheels 20, mounted on two respective front telescopic legs 24 placed upstream of the main body 21 in the advancement sense, and in particular connected (e.g. fixed) at the front end 21' of the main body 21.

Preferably, the farming machine 1 comprises two rear wheels 20, mounted on two respective rear telescopic legs 24 placed downstream of the main body 21 in the advancement sense, and in particular connected (e.g. fixed) at the rear end 21" of the main body 21.

In particular, the front mounting bar 22 is placed to connect the front 24 telescopic legs and, preferably, the rear mounting bar 23 is placed to connect the rear telescopic legs 24.

Advantageously, the farming machine 1 comprises a logic control unit 7, mounted on the support frame 2, which is operatively connected at least to the actuation means 6 in order to command the latter to enable and/or disable the operation of the first, second and third tool 3, 4, 5.

In particular, the logic control unit 7 is connected to the actuation motors 60 and, preferably, to the advancement motors and to the steering motors.

More in detail, the logic control unit 7 comprises a user interface, in particular provided with a screen (e.g. a touch-screen) in order to allow a user to control the actuation of the wheels 20. Advantageously, the logic control unit 7 is operatively connected to the actuators mounted on the telescopic legs 24 in order to command the actuators themselves to move the corresponding telescopic legs 24 between the aforesaid extended position and the retracted position.

Preferably, the logic control unit 7 is configured in order to command the actuator members to move the front 22, rear 23 and internal 24 mounting bars in order to adjust the passage width L between the aforesaid configuration of minimum extension and that of maximum extension.

Advantageously, the logic control unit 7 is provided with an autonomous guide system, which allows the farming machine 1 to autonomously advance along the advancement direction A and to carry out the aforesaid working operations on the terrain through the first, the second and the third tool 3, 4, 5. In particular, for such purpose, the farming machine 1 is provided with a positioning system, e.g. a GPS, placed in data communication with the logic control unit 7 in order to transmit, to the latter, data containing information relative to the position of the farming machine 1 itself.

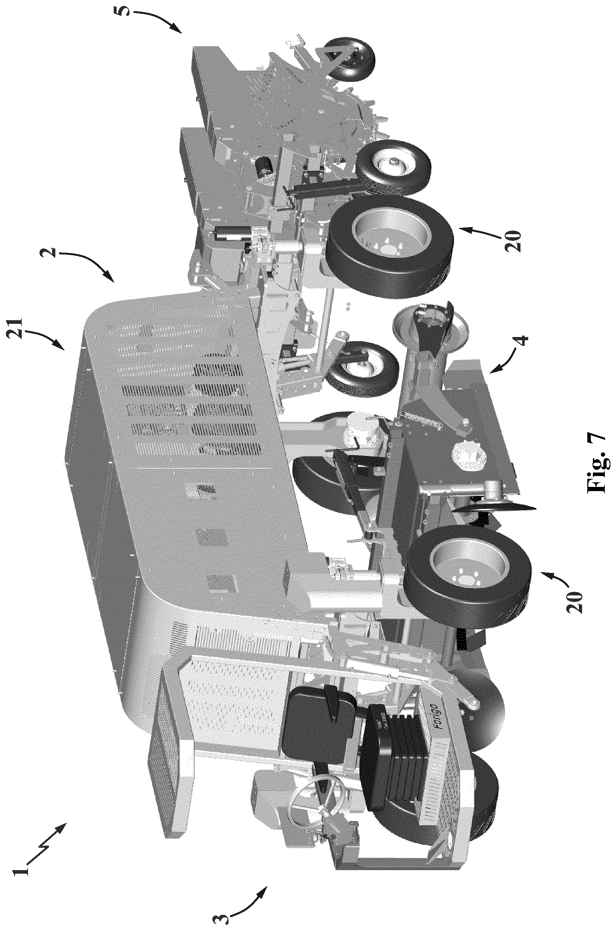

Advantageously, as illustrated for example in figure 7, one among the first, the second and the third tool 3, 4, 5, and preferably the first tool 3, can be a command station for a user, preferably provided with a seat for the user himself/herself.

In particular, the first tool 3 is a command station for a user in the event in which the working operations to be carried out in a terrain are complex and require a constant supervision by a user.

In this manner, the farming machine 1 can be used both in an automatic manner, for example by means of the logic control unit 7, and with a user on board.

The invention thus conceived therefore attains the pre-established objects.

## Claims

1. Farming machine (1), which comprises:
- a support frame (2), which is provided with at least four wheels (20), in order to allow said farming machine (1) to advance on a terrain along an advancement direction (A), and with a main body (21), which is supported by said wheels (20), spaced with respect to said terrain, and which on the lower part delimits a housing volume (V);
the main body (21) of said support frame (2) extended along a main extension direction (X), parallel to said advancement direction (A), between a front end (21') and an opposite rear end (21");
- a first tool (3), mounted at the front end (21') of the main body (21) of said support frame (2), outside said housing volume (V), and arranged for carrying out a first working operation;
- a second tool (4), connected to said main body (21), placed in said housing volume (V), and arranged for carrying out a second working operation;
- a third tool (5), mounted at the rear end (21") of the main body (21) of said support frame (2), outside said housing volume (V), and arranged for carrying out a third working operation;
- actuation means (6), which are mounted on said support frame (2) and are operatively connected, in an independent manner, to said first tool (3), second tool (4) and third tool (5), in order to actuate said tools (3, 4, 5) in an independent manner during the advancement of said farming machine (1) on said terrain.

2. Farming machine (1) according to claim 1, **characterized in that** said first tool (3) is connected at a central portion of the front end (21') of said main body (21), and that said third tool (5) is connected at a central portion of the rear end (21") of said main body (21).

3. Farming machine (1) according to claim 1 or 2, **characterized in that** said first, second and third tool (3, 4, 5) are placed aligned with each other along an alignment direction (X'), which is parallel to said main extension direction (X) and to said advancement direction (A), in order to carry out a predetermined sequence of work operations during the advancement of said farming machine (1) on said terrain.

4. Farming machine (1) according to any one of the preceding claims, **characterized in that**:
- said first tool (3) is selected from among an agricultural shredder machine, a farming milling machine, a farming burier, a disc cultivator, a blade cultivator;
- said second tool (4) is selected from among a fertilizer spreader, a farming milling machine, a farming burier, a bed former, a device for extending a mulching sheet, a seeder;
- said third tool (5) is selected from among a seeder, a device for extending a mulching sheet, an irrigation pipe, a spraying device.

5. Farming machine (1) according to claim 4, **characterized in that** said first tool (3) is an agricultural shredder machine, said second tool (4) is a bed former, and said third tool (5) is a seeder.

6. Farming machine (1) according to any one of the preceding claims, **characterized in that** said support frame (2) defines, with said wheels (20), a passage width (L), and that each said first, second and third tool (3, 4, 5) defines a respective work width (W', W'', W‴), which is smaller than the passage width (L) defined by said wheels (20).

7. Farming machine (1) according to any one of the preceding claims, **characterized in that**
said support frame (2) comprises a front mounting bar (22), connected at the front end (21') of said main body (21), and a rear mounting bar (23), connected at the rear end (21") of said main body (21);
said first tool (3) being provided with a first three-point attachment (30), connected to said front mounting bar (22), and said third tool (5) being provided with a second three-point attachment (50), connected to said rear mounting bar (23).

8. Farming machine (1) according to any one of the preceding claims, **characterized in that** it comprises multiple advancement motors, wherein each said wheel (20) of said at least four wheels (20) is connected to a corresponding said advancement motor, in order to allow the independent motorization of said wheels (20).

9. Farming machine (1) according to any one of the preceding claims, **characterized in that**
said support frame (2) comprises multiple telescopic legs (24), each of which connected to the main body (21) of said support frame (2) and carries a corresponding wheel (20) mounted thereon;
said farming machine (1) comprising multiple actuators, each of which mounted on a corresponding telescopic leg (24) of said support frame (2), and is actuatable in order to move the corresponding said telescopic leg (24) between an extended position and a retracted position.

10. Farming machine (1) according to any one of the preceding claims, **characterized in that** it comprises a logic control unit (7), mounted on said support frame (2), which is operatively connected at least to said actuation means (6) in order to command said actuation means (6) to enable and/or disable the operation of said tools (3, 4, 5).

11. Farming machine (1) according to any one of the preceding claims, **characterized in that** said main body (21) comprises a lower wall (25), which is arranged for being directed towards the terrain and delimits said housing volume (V) on the lower part thereof.

12. Farming machine (1) according to claim 11, **characterized in that** said support frame (2) comprises a closure casing (26), mounted on the lower wall (25) of said main body (21), and defining, with said lower wall (25), a containment volume (C), in which said actuation means (6) are housed.

13. Farming machine (1) according to claim 12, **characterized in that** said actuation means (6) comprise multiple actuation motors (60), each of which arranged for providing energy respectively to said first, second and third tool (3, 4, 5) and is arranged in said containment volume (C).
